# FASCICULE DE BREVET EUROPEEN

(11) **EP 2 760 631 B1**
(45) Date de publication et mention de la délivrance du brevet: **06.01.2016**
(21) Numéro de dépôt: 12759792.0
(22) Date de dépôt: 29.08.2012
(51) Int. Cl.: B24B 1/00, B24B 9/14, B24B 49/16

(54) **PROCEDE DE DETOURAGE D'UNE LENTILLE OPHTALMIQUE**
VERFAHREN ZUM KONTURFRÄSEN EINES BRILLENGLASES
METHOD FOR TRIMMING AN OPTHALMIC LENS

(30) Priorité: 26.09.2011 FR 1102911
(43) Date de publication de la demande: 06.08.2014
(73) Titulaire: Essilor International (Compagnie Générale d'Optique), 94220 Charenton-le-Pont (FR)
(72) Inventeur: LEMAIRE, Cédric, 94220 Charenton-le-Pont (FR); PINAULT, Sébastien, 94220 Charenton-le-Pont (FR)
(74) Mandataire: Chauvin, Vincent
(86) Numéro de dépôt international: PCT/FR2012/000343
(87) Numéro de publication internationale: WO 2013/045769

(56) Documents cités:
- FR-A1- 2 894 170
- US-A1- 2004 192 170

## Description

### DOMAINE TECHNIQUE AUQUEL SE RAPPORTE L'INVENTION

La présente invention concerne de manière générale la préparation de lentilles ophtalmiques brutes, en vue de leur montage sur des montures de lunettes.

Cette invention s'applique aux dispositifs d'usinage selon le préambule de la revendication 14 (voir FR 2894170), en particulier comportant :
- un moyen de blocage de la lentille ophtalmique,
- un outil d'usinage de la lentille ophtalmique,
- un capteur d'effort adapté à mesurer un effort d'usinage relatif à l'effort appliqué par l'outil d'usinage sur la lentille ophtalmique, et
- une unité de pilotage dudit outil d'usinage par rapport audit moyen de blocage.

Elle concerne plus particulièrement un procédé de détourage d'une lentille ophtalmique selon le préambule de la revendication 1 (voir FR 2894170), en particulier comportant :
- une étape de blocage de la lentille ophtalmique sur ledit moyen de blocage, et
- une étape de détourage de la lentille ophtalmique à l'aide dudit outil d'usinage, au cours de laquelle on mesure la valeur sous charge dudit effort d'usinage et on pilote ledit outil d'usinage par rapport audit moyen de blocage de manière à ramener le contour initial de la lentille ophtalmique à un contour final de forme différente, en fonction de la valeur sous charge mesurée.

### ARRIERE-PLAN TECHNOLOGIQUE

Lors du détourage d'une lentille ophtalmique, il s'avère nécessaire de déterminer l'effort appliqué par l'outil d'usinage sur la lentille ophtalmique afin de s'assurer notamment que cet effort reste constamment inférieur à un seuil au-delà duquel la lentille risquerait de s'échapper de son moyen de blocage ou au-delà duquel l'outil pourrait être endommagé. Il est également connu d'utiliser cet effort pour piloter le dispositif d'usinage avec une acuité accrue.

L'une des solutions pour déterminer cet effort d'usinage consiste à mesurer la valeur instantanée de la vitesse de rotation de l'outil, à mesurer la valeur instantanée de la puissance électrique délivrée à l'outil, et à déduire l'effort d'usinage en fonction du rapport entre ces deux valeurs.

Malheureusement, lorsque le matériau de la lentille rentre en fusion à proximité de l'outil d'usinage, cette solution devient très imprécise.

Une autre solution connue pour déterminer l'effort d'usinage consiste à utiliser un capteur d'effort tel qu'une jauge de contrainte.

L'inconvénient majeur de cette solution est qu'elle s'avère en pratique peu précise.

On constate en effet un écart notable entre l'effort mesuré par la jauge de contrainte et l'effort réellement appliqué par l'outil sur la lentille, qui peut ainsi atteindre plus de 10 Newton. Cet écart provient notamment des forces résistantes générées par les frottements entre les différentes pièces mobiles du dispositif d'usinage. On constate d'ailleurs que cet écart varie au cours de l'usinage de la lentille.

Lors de cet usinage, il est alors nécessaire de prévoir que l'effort mesuré reste inférieur d'au moins 15 Newton au seuil précité, pour que l'effort d'usinage réel reste inférieur à ce seuil.

Du fait de ce manque de précision dans les mesures, il n'est par ailleurs pas possible de tirer d'autres enseignements des valeurs mesurées, relatifs par exemple à l'usure de l'outil d'usinage.

### OBJET DE L'INVENTION

Afin de remédier aux inconvénients précités de l'état de la technique, la présente invention propose de traiter les valeurs mesurées afin d'en éliminer les composantes parasites.

Plus particulièrement, on propose selon l'invention un procédé de détourage tel que défini dans l'introduction, dans lequel il est prévu, entre ladite étape de blocage et ladite étape de détourage, au moins une étape intermédiaire au cours de laquelle on pilote ledit outil d'usinage par rapport audit moyen de blocage de manière à parcourir le tour de ladite lentille ophtalmique, sans contact, suivant une trajectoire déduite dudit contour initial, et au cours de laquelle on enregistre la valeur hors charge de l'effort d'usinage, et dans lequel il est prévu, au cours de l'étape de détourage, de piloter ledit outil d'usinage en fonction de la valeur hors charge de l'effort d'usinage.

Au cours de l'étape intermédiaire, l'outil d'usinage est donc piloté pour tourner dans le vide autour de la lentille préalablement bloquée sur le moyen de support, dans des conditions proches de celles qu'il rencontrera au cours de l'étape de détourage.

Cette étape intermédiaire permet ainsi, en relevant la valeur hors charge de l'effort d'usinage, de déterminer les variations des efforts de frottement s'exerçant sur les éléments du dispositif lorsque l'outil d'usinage tourne autour de la lentille.

Cette mesure est notamment réalisée alors que la lentille est déjà bloquée sur le moyen de blocage, si bien qu'elle tient compte de l'effort de serrage appliqué sur la lentille, du poids de la lentille, ...

Elle est par ailleurs réalisée en suivant le contour initial de la lentille, si bien qu'elle est effectuée dans des conditions très proches de celles que rencontrera l'outil lors de l'étape de détourage.

Il est alors possible de retrancher cette valeur hors charge à la valeur mesurée sous charge, pour obtenir une approximation très fine de l'effort qui est réellement exercé par l'outil d'usinage sur la lentille.

Grâce à cette approximation, il est possible de piloter l'outil d'usinage de telle sorte qu'il exerce sur la lentille un effort proche du seuil admissible, au bénéfice de la qualité de l'usinage et de la rapidité d'exécution de cet usinage.

Il est également possible d'en déduire une approximation de l'usure de l'outil d'usinage, en prévoyant si nécessaire d'alerter l'opticien si le degré d'usure dépasse une valeur admissible.

Il est aussi possible de détecter une défaillance ou un problème au cours de l'usinage d'une lentille, tel que par exemple une erreur dans la saisie du matériau de la lentille à détourer, en prévoyant si nécessaire d'alerter l'opticien.

Il est aussi possible d'analyser, en fonction des valeurs mesurées, l'évolution des frottements afin d'étalonner en continu le dispositif d'usinage.

D'autres caractéristiques avantageuses et non limitatives du procédé de détourage conforme à l'invention sont les suivantes :
- ladite trajectoire suit ledit contour initial et est écartée de celui-ci d'une distance d'au maximum 5 millimètres ;
- ladite trajectoire est une homothétie ou une surcote constante dudit contour initial ;
- ladite étape de détourage est une étape d'ébauche ;
- ladite étape de détourage est une étape de finition, précédée d'une étape d'ébauche, et dans laquelle ladite étape intermédiaire intervient entre l'étape d'ébauche et l'étape de finition ;
- ladite étape de finition comporte une opération de rainage ou une opération de fraisage ou une opération de biseautage et/ou une opération de chanfreinage et/ou une opération de polissage ;
- ledit moyen de blocage étant adapté à entraîner en rotation la lentille en incrémentant sa position angulaire d'un pas régulier :
   - au cours de l'étape intermédiaire, la valeur hors charge dudit effort d'usinage est mesurée à chaque pas du moyen de blocage,
   - au cours de l'étape de détourage, la valeur sous charge dudit effort d'usinage est mesurée à chaque pas du moyen de blocage, et
   - à chaque pas au cours de l'étape de détourage, ledit outil d'usinage est piloté en fonction de la différence entre la valeur sous charge mesurée au pas précédent et la valeur hors charge mesurée au pas correspondant lors de l'étape intermédiaire ;
- à l'étape de détourage, on pilote ledit outil d'usinage par rapport audit moyen de blocage de telle sorte que l'effort appliqué par ledit outil d'usinage sur la lentille ophtalmique, qui est déduit de la différence entre la valeur sous charge mesurée et la valeur hors charge enregistrée correspondante, reste sensiblement égal à une constante prédéterminée ;
- à l'étape de détourage, on pilote ledit outil d'usinage par rapport audit moyen de blocage de telle sorte que le temps de cycle pour mettre en oeuvre cette étape de détourage soit égal à une durée prédéterminée ;
- si la différence entre la valeur sous charge mesurée et la valeur hors charge enregistrée correspondante dépasse une valeur seuil déterminée durant une durée déterminée, on pilote ledit outil d'usinage par rapport audit moyen de blocage en fonction de la différence entre la valeur sous charge mesurée et la valeur hors charge enregistrée correspondante de telle manière que le temps de cycle pour mettre en oeuvre cette étape de détourage dépasse ladite durée prédéterminée ;
- si la dérivée de la différence entre la valeur sous charge mesurée et la valeur hors charge enregistrée correspondante dépasse une valeur seuil déterminée, on pilote ledit outil d'usinage par rapport audit moyen de blocage en fonction de la différence entre la valeur sous charge mesurée et la valeur hors charge enregistrée correspondante de telle manière que le temps de cycle pour mettre en oeuvre cette étape de détourage dépasse ladite durée prédéterminée ;
- à l'issue de ladite étape de détourage, on détermine un indicateur caractéristique de l'effort appliqué par ledit outil d'usinage sur la lentille ophtalmique au cours de l'étape de détourage, qui est fonction de la différence entre au moins une valeur sous charge mesurée et la valeur hors charge enregistrée correspondante, et il est prévu une étape de surveillance dans laquelle on compare ledit indicateur avec une valeur seuil pour vérifier que l'outil d'usinage est en état de fonctionnement ;
- à l'issue de ladite étape de détourage, on mémorise un indicateur caractéristique de l'effort appliqué par ledit outil d'usinage sur la lentille ophtalmique au cours de l'étape de détourage, qui est fonction de la différence entre au moins une valeur sous charge mesurée et la valeur hors charge enregistrée correspondante, et il est prévu une étape de surveillance dans laquelle on surveille l'évolution dudit indicateur.

L'invention concerne également un dispositif d'usinage d'une lentille ophtalmique tel que défini en introduction, dans lequel ladite unité de pilotage est adaptée à mettre en oeuvre les étapes intermédiaire et de détourage du procédé de détourage précité.

Avantageusement alors, le capteur d'effort comporte soit une unique jauge de contrainte unidirectionnelle, soit deux jauges de contrainte unidirectionnelles ou une jauge de contrainte bidirectionnelle.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un dispositif d'usinage adapté à mettre en oeuvre le procédé selon l'invention ;
- la figure 2 illustre, en trait continu, le contour d'un entourage d'une monture de lunettes, en traits discontinus, le cadre boxing de ce contour, et , en traits pointillés, un contour intermédiaire obtenu par homothétie ;
- la figure 3 illustre, en trait continu, le contour d'un entourage d'une monture de lunettes, et, en traits pointillés, un contour intermédiaire obtenu par surcote constante.

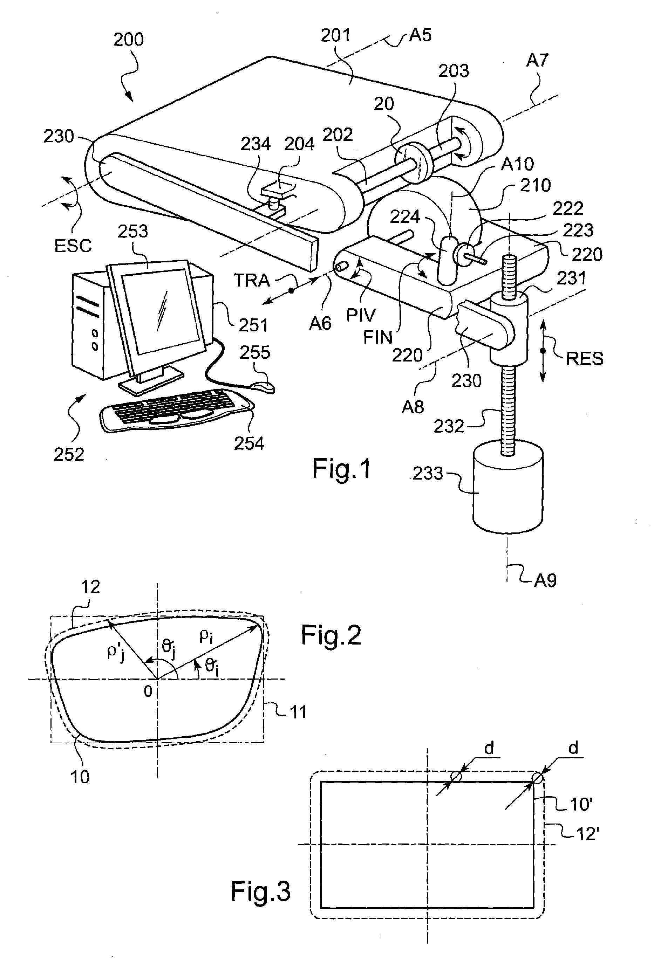

On a représenté sur la figure 1 un dispositif d'usinage 200 d'une lentille ophtalmique 20, comportant :
- des moyens de blocage 202, 203 de la lentille ophtalmique 20,
- au moins un outil d'usinage 210, 222, 223 de la lentille ophtalmique 20,
- un capteur d'effort 234 adapté à mesurer un effort d'usinage relatif à l'effort appliqué par l'outil d'usinage 210, 222, 223 sur la lentille ophtalmique 20, et
- une unité de pilotage 251 de chaque outil d'usinage 210, 222, 223 par rapport aux moyens de blocage 202, 203.

Ce dispositif d'usinage 200 pourrait être réalisé sous la forme de toute machine de découpage ou d'enlèvement de matière apte à modifier le contour de la lentille ophtalmique 20 pour l'adapter à celui de l'entourage correspondant de la monture de lunettes sélectionnée.

Dans l'exemple schématisé sur la figure 1, le dispositif d'usinage 200 est constitué, de manière connue en soi, par une meuleuse 200 automatique, communément dite numérique. Cette meuleuse comporte en l'espèce :
- une bascule 201 qui est montée librement pivotante autour d'un axe de référence A5, en pratique un axe horizontal, sur un châssis non représenté, et qui supporte la lentille ophtalmique 20 à usiner ;
- au moins une meule 210, qui est calée en rotation sur un axe de meule A6 parallèle à l'axe de référence A5, et qui est elle aussi dûment entraînée en rotation par un moteur non représenté ;
- un module de finition 220 qui est monté mobile en rotation autour de l'axe de meule A6, et qui embarque des outils de finition 222, 223 de la lentille ophtalmique 20.

La mobilité de pivotement de la bascule 201 autour de l'axe de référence est appelée mobilité d'escamotage ESC. Elle permet de rapprocher la lentille ophtalmique 20 de la meule 210, jusqu'à mettre celle-ci au contact de celle-là.

Cette bascule 201 est équipée de deux arbres de serrage et d'entraînement en rotation 202, 203 de la lentille ophtalmique 20 à usiner, qui correspondent aux « moyens de blocage » précités.

Ces deux arbres 202, 203 sont alignés l'un avec l'autre suivant un axe de blocage A7 parallèle à l'axe A5. Chacun des arbres 202, 203 possède une extrémité libre qui fait face à l'autre et qui est équipée d'un nez de blocage de la lentille ophtalmique 20.

Un premier des deux arbres 202 est fixe en translation suivant l'axe de blocage A7. Le second des deux arbres 203 est au contraire mobile en translation suivant l'axe de blocage A7 pour réaliser le serrage en compression axiale de la lentille ophtalmique 20 entre les deux nez de blocage.

Telle que représentée schématiquement sur la figure 1, la meuleuse 200 ne comporte qu'une meule cylindrique 210.

En pratique, elle comporte plutôt un train de plusieurs meules montées coaxialement sur l'axe de meule A6, chaque meule étant utilisée pour une opération de détourage spécifique de la lentille ophtalmique 20 à usiner.

Pour l'ébauche de la lentille, on utilise ainsi une meule d'ébauche cylindrique.

Pour le biseautage de la lentille, qui consiste à usiner une nervure le long du chant de la lentille, on utilise une meule de forme (ou « meule de biseautage ») présentant une gorge de biseautage de section en dièdre.

Pour le polissage de la lentille, on utilise une meule cylindrique et une meule de forme, de géométries identiques à celles des deux meules précitées, dont les grains sont particulièrement fins.

Le train de meules est porté par un chariot, non représenté, monté mobile en translation suivant l'axe de meule A6. Le mouvement de translation du chariot porte-meules est appelé « transfert » TRA.

On comprend qu'il s'agit ici de réaliser un mouvement relatif des meules par rapport à la lentille et que l'on pourra prévoir, en variante, une mobilité axiale de la lentille, les meules restant fixes.

La meuleuse 200 comporte, en outre, une biellette 230 dont une extrémité est articulée par rapport au châssis pour pivoter autour de l'axe de référence A5, et dont l'autre extrémité est articulée par rapport à une noix 231 pour pivoter autour d'un axe A8 parallèle à l'axe de référence A5.

La noix 231 est elle-même montée mobile en translation suivant un axe de restitution A9 perpendiculaire à l'axe de référence A5. Telle que schématisée sur la figure 6, la noix 231 est une noix taraudée en prise à vissage avec une tige filetée 232 qui, alignée suivant l'axe de restitution A9, est entraînée en rotation par un moteur 233.

La biellette 230 comporte par ailleurs un capteur d'effort 234, ici constitué par une jauge de contrainte unidirectionnelle, qui interagit avec une butée 204 fixée à la bascule 201.

Lorsque, dûment enserrée entre les deux arbres 202, 203, la lentille ophtalmique 20 à usiner est amenée au contact de l'une des meules 210, elle est l'objet d'un enlèvement effectif de matière jusqu'à ce que la butée 204 de la bascule 201 vienne buter contre la biellette 230 suivant un appui qui, se faisant au niveau de la jauge de contrainte 234, est dûment détecté et mesuré par celle-ci.

La jauge de contrainte 234 est alors ici placée de manière à mesurer un effort d'usinage de direction sensiblement verticale, correspondant à la composante radiale de l'effort exercé par la lentille ophtalmique 20 sur la meule 210 ou sur l'outil de finition 222, 223 utilisé.

Pour l'usinage de la lentille ophtalmique 20 suivant un contour donné, il suffit, donc, d'une part, de déplacer en conséquence la noix 231 le long de l'axe de restitution A9, sous le contrôle du moteur 233, pour commander le mouvement de restitution RES et, d'autre part, de faire pivoter conjointement les arbres de support 202, 203 autour de l'axe de blocage A7. Le mouvement de restitution (et donc d'escamotage de la bascule 201) et le mouvement de rotation des arbres 202, 203 sont pilotés en coordination par une unité de pilotage 251, dûment programmée à cet effet, pour que tous les points du contour de la lentille ophtalmique 20 soient successivement ramenés au bon diamètre.

Selon l'invention, le mouvement d'escamotage est notamment piloté en fonction de l'effort d'usinage mesuré par la jauge de contrainte 234, de manière à éviter que cet effort ne dépasse un seuil au-delà duquel la lentille 20 risquerait de glisser entre les arbres 202, 203 ou au-delà duquel l'outil utilisé risquerait d'être endommagé.

Le module de finition 220 présente quant à lui une mobilité de pivotement autour de l'axe de meule A6, notée PIV. Concrètement, le module de finition 220 est pourvu d'une roue dentée (non représentée) qui engrène avec un pignon équipant l'arbre d'un moteur électrique solidaire du chariot porte-meules. Cette mobilité lui permet de se rapprocher ou de s'éloigner de la lentille ophtalmique 20.

Les outils de finition 222, 223 embarqués sur le module de finition 220 comportent ici notamment un disque de rainage 222 adapté à réaliser une gorge le long du chant de la lentille ophtalmique 20, et une fraise 223 adaptée à chanfreiner les arêtes tranchantes de la lentille ophtalmique 20.

Ces outils de finition 222, 223 sont montés rotatifs sur un même axe et sont entraînés en rotation par un moteur logé dans un socle 224 qui est lui-même monté pivotant sur le module de finition 220 autour d'un axe A10 orthogonal à l'axe de meule A6. Cette mobilité de pivotement du socle 224 autour de l'axe A10, appelée mobilité de finition FIN, permet d'orienter au mieux les outils 222, 223 par rapport à la lentille.

L'unité de pilotage 251 est de type électronique et/ou informatique et elle permet en particulier de piloter :
- le moteur d'entraînement en translation du deuxième arbre 203 ;
- le moteur d'entraînement en rotation des deux arbres 202, 203 ;
- le moteur d'entraînement en translation du chariot porte-meules suivant la mobilité de transfert TRA ;
- le moteur 233 d'entraînement en translation de la noix 231 suivant la mobilité de restitution RES ;
- le moteur d'entraînement en rotation du module de finition 220 suivant la mobilité de pivotement PIV;
- le moteur d'entraînement en rotation du socle 224 des outils de finition 222, 223 suivant la mobilité de finition FIN.

La meuleuse 200 comporte enfin une interface Homme-Machine 252 qui comprend ici un écran d'affichage 253, un clavier 254 et une souris 255 adaptés à communiquer avec l'unité de pilotage 251. Cette interface IHM 252 permet à l'utilisateur de saisir des valeurs numériques sur l'écran d'affichage 253, tel que le matériau de la lentille, pour que les outils de la meuleuse 200 soient pilotés en conséquence.

Telle que représentée sur la figure 1, l'unité de pilotage est implémentée sur un ordinateur de bureau connecté à la meuleuse 200. Bien sûr, en variante, la partie logicielle de la meuleuse pourrait être implémentée directement sur un circuit électronique de la meuleuse. Elle pourrait également être implémentée sur un ordinateur distant, communiquant avec la meuleuse par un réseau privé ou public, par exemple en utilisant un protocole de communication par IP (internet).

On considérera dans la suite de cet exposé que la monture de lunettes destinée à accueillir la lentille ophtalmique 20 est du type cerclé, et qu'elle comporte en conséquence deux entourages liés l'un à l'autre par un pontet, qui présentent chacun une rainure intérieure appelée « drageoir » dans laquelle pourra être emboîtée la lentille.

Sur la figure 2, on a représenté en trait continu une projection du contour 10 du fond du drageoir de cet entourage.

On a également représenté, en traits discontinus, le cadre boxing 11 de ce contour 10.

On rappelle à cet effet que le cadre boxing 11 est le rectangle qui est circonscrit à la projection du contour 10, et dont deux des côtés sont parallèles à l'horizontal.

Le centre O de ce cadre boxing 11 forme alors l'origine d'un repère en coordonnées polaires ρ, θ.

Préalablement au détourage de la lentille ophtalmique 20, l'unité de pilotage 251 acquiert la géométrie du contour 10.

Ce contour 10 pourra par exemple être acquis sous la forme d'un ensemble de triplets (ρᵢ, θᵢ, zᵢ) correspondant aux coordonnées cylindriques d'une pluralité de points caractérisant la forme de ce contour 10.

De manière préférentielle, ces triplets seront acquis dans un registre de base de données à la disposition de l'opticien. Ce registre de base de données, régulièrement mis à jour par le fabricant de montures de lunettes ou par le fabricant de lentilles ophtalmiques ou encore par l'opticien lui-même, comportera à cet effet une pluralité d'enregistrements chacun associé à un modèle de montures de lunettes. Chaque enregistrement comportera alors un identifiant du modèle de la monture de lunettes auquel il est associé, et un ensemble de 360 triplets caractérisant la forme du fond du drageoir de chaque entourage de ce modèle de monture de lunettes.

En variante, le contour 10 pourra être acquis à l'aide d'un dispositif d'imagerie comportant des moyens de capture d'images et des moyens de traitement d'images. Grâce à ce dispositif d'imagerie, les coordonnées bidimensionnelles des points caractérisant la forme du contour 10 pourront être acquises en prenant une photo d'une lentille de présentation livrée avec la monture de lunettes, puis en traitant cette photo de manière à repérer sur cette photo 360 points situés sur sa tranche.

Bien entendu, les triplets (ρᵢ, θᵢ, zᵢ) des 360 points caractérisant la forme du contour 10 pourront également être acquis autrement, par exemple par palpage avec contact du fond du drageoir de chaque entourage.

La lentille fait ensuite l'objet d'une opération de centrage suivie d'une opération de blocage. Ces deux opérations sont bien connues de l'homme du métier et ne font pas l'objet de la présente invention, si bien qu'elles seront décrites brièvement.

Au cours de l'opération de centrage, on détermine la position de repères marqués ou gravés sur la lentille, et on en déduit la position que doit présenter le contour 10 sur la lentille de telle manière qu'une fois la lentille détourée suivant ce contour et emboîtée dans la monture sélectionnée, son centre optique se retrouve correctement placé par rapport à l'oeil correspondant du porteur de lunettes.

Au cours de l'opération de blocage, on colle un accessoire de préhension sur la lentille en une position centrée sur le centre O du cadre boxing 11, puis, grâce à cet accessoire de préhension, on bloque la lentille entre les arbres 202, 203 de l'appareil d'usinage 200 de telle sorte que le centre O se trouve centré sur l'axe de blocage A7.

Le détourage est ensuite réalisé en deux opérations d'ébauche et de finition.

Pour l'ébauche de la lentille, on utilise la meule cylindrique pour réduire grossièrement les rayons de la lentille à une forme proche de la forme du contour 10. La meule cylindrique et la bascule 201 sont plus précisément ici pilotées l'une relativement à l'autre de manière à réduire, pour chaque position angulaire θᵢ de la lentille autour de l'axe de blocage A7, le rayon de la lentille à une longueur égale au rayon ρᵢ du contour 10.

Pour la finition de la lentille, on utilise la meule de forme pour former sur le chant de la lentille une nervure d'emboîtement, ou « biseau », dont le sommet s'étend en longueur suivant une trajectoire de forme proche de celle du contour 10. La meule cylindrique et la bascule 201 sont plus précisément ici pilotées l'une relativement à l'autre de manière à réduire, pour chaque position angulaire θᵢ de la lentille autour de l'axe de blocage A7, le rayon du sommet du biseau de la lentille à une longueur égale à ρᵢ - k₁, avec k₁ une constante prédéterminée tenant compte du fait que le sommet du biseau ne viendra pas au contact du fond du drageoir, mais restera à distance de celui-ci.

Lors de cette opération de finition, on peut observer que, relativement à l'axe de meule A6, la lentille ophtalmique 20 suit une trajectoire déduite de la forme du contour 10.

Bien entendu, si la lentille était destinée à être montée sur une monture de lunettes semi-cerclée, on utiliserait pour la finition de la lentille le disque de rainage 222. Le socle 224, le module de finition 220 et la bascule 201 seraient alors plus précisément pilotés les uns relativement aux autres de manière à former, pour chaque position angulaire θᵢ de la lentille autour de l'axe de blocage A7, une rainure en creux dans le chant de la lentille telle que son fond présenterait une distance de l'axe de blocage A7 égale à ρᵢ - k₂, avec k₂ une constante prédéterminée fonction de la profondeur souhaitée pour cette rainure.

Selon l'invention, une opération intermédiaire est mise en oeuvre entre l'opération de blocage et l'une des opérations de détourage, et plus particulièrement ici entre l'opération d'ébauche et l'opération de finition.

Cette opération intermédiaire consiste globalement à piloter les différents organes de la meuleuse 200 suivant une trajectoire très proche de celle qu'ils suivront lorsqu'ils usineront la lentille ophtalmique 20 lors de l'opération de finition, mais hors charge c'est-à-dire sans que la lentille touche l'un des outils, de manière à relever la valeur hors charge des efforts nécessaires pour déplacer ces organes à vide, compte-tenu des forces de frottements et d'inertie.

Plus précisément, l'opération intermédiaire consiste, d'une part, à piloter la rotation des arbres 202, 203, l'escamotage ESC de la bascule 201 et le transfert TRA du train de meules 210 de telle manière que la lentille tourne sur elle-même sur une révolution complète suivant une trajectoire telle que son chant reste à faible distance de l'outil sélectionné, et, d'autre part, à relever et mémoriser la valeur hors charge de l'effort d'usinage mesuré par la jauge de contrainte 234 pour chaque position angulaire θᵢ de la lentille autour de l'axe de blocage A7.

De cette manière, lors de l'opération de finition, il est possible de piloter ces organes, et notamment l'escamotage ESC de la bascule 201, compte-tenu de l'effort réellement exercé par la lentille ophtalmique 20 sur l'outil (qui correspond à la valeur mesurée de l'effort d'usinage retranchée de la valeur hors charge préalablement mesurée).

La mise en oeuvre détaillée de cette opération intermédiaire est la suivante.

L'unité de pilotage 251 commence par calculer la trajectoire que doit suivre la lentille ophtalmique 20 par rapport à la meule de forme, pour que son chant reste à très faible distance de cette dernière.

Comme cela a été exposé supra, à ce stade du procédé de détourage, le chant de la lentille est situé, pour chaque position angulaire θᵢ de la lentille, à une distance ρᵢ de l'axe de blocage A7.

On souhaite alors piloter les organes de la meuleuse 200 de telle manière que la meule de forme passe, pour chaque position angulaire θᵢ de la lentille, à une distance ρ'ᵢ de l'axe de blocage A7 qui est strictement supérieure à la distance ρᵢ.

Comme le montre la figure 2, les doublets (ρ'ᵢ, θᵢ) définissent alors un contour intermédiaire 12 élargi par rapport au contour 10, qui correspond à la trajectoire que suivra la surface de travail de la meule de forme par rapport au chant de la lentille ophtalmique 20.

En l'espèce, les distances ρ'ᵢ sont choisies de telle manière que le contour intermédiaire 12 soit en tout point écarté du contour 10 d'une distance non nulle et inférieure à 5 millimètres.

Elles sont ici plus précisément calculées à l'aide de la relation suivante :
ρ'ᵢ = h.ρᵢ, avec h une constante prédéterminée ici égale à 1,1.

Le contour intermédiaire 12 forme donc une homothétie du contour 10, de centre O et de rapport h.

En variante, on pourrait bien entendu calculer ces distances ρ'_{¡} différemment. A titre d'exemple, tel que représenté sur la figure 3, le contour intermédiaire 12' pourrait être calculé de manière à former une surcote constante du contour 10', de telle sorte que l'écart d entre ces deux contours soit invariable.

Quoi qu'il en soit, l'escamotage ESC de la bascule 201, la rotation des arbres 202, 203 et le transfert TRA du train de meules 210 sont alors pilotés de telle manière que, pour chaque position angulaire θᵢ de la lentille autour de l'axe de blocage A7, la meule de forme soit située à une distance ρ'ᵢ de l'axe de blocage A7.

La valeur hors charge F₀ᵢ de l'effort d'usinage mesuré par la jauge de contrainte 234 est alors relevée pour chaque position angulaire θᵢ de la lentille, puis mémorisée dans une base de donnée ad hoc de l'unité de pilotage 251.

Alors, au cours de l'étape de finition, la valeur sous charge F₁ᵢ de l'effort d'usinage est mesurée pour chaque position angulaire θᵢ de la lentille, et l'escamotage ESC de la bascule 201 est piloté en fonction de la différence ΔFᵢ entre la valeur sous charge F_{1 i-1} tout juste mesurée et la valeur hors charge F₀ᵢ mesurée lors de l'étape intermédiaire.

On comprend ici que cette différence ΔFᵢ correspond, à un facteur près, à l'effort réellement exercé par la lentille sur la meule de forme.

Dans un premier mode de mise en oeuvre de la finition de la lentille, on pilote la bascule 201 en force.

Dans ce mode, l'escamotage ESC de la bascule 201 est plus précisément piloté pour que cette différence ΔFᵢ reste constamment égale à un seuil prédéterminé, défini comme le seuil au-delà duquel la lentille ophtalmique 20 risquerait de glisser entre les arbres 202, 203 ou au-delà duquel la meule de forme ou la lentille pourrait être endommagée.

De cette manière, le biseautage de la lentille est opéré avec une rapidité optimale.

Lors de cette opération, compte-tenu de la durée du biseautage de la lentille, il est possible d'en déduire une approximation de l'usure de la meule de forme.

Alors, au-delà d'un taux d'usure prédéterminé, l'unité de pilotage peut être programmée pour alerter l'usager via l'écran 253, en affichant un message d'alerte.

Lors de cette opération, compte tenu de la vitesse d'usinage de la lentille, il est également possible de détecter une défaillance ou un problème au cours de l'usinage d'une lentille, tel que par exemple une erreur dans la saisie par l'usager du matériau de la lentille à détourer.

Alors, ici également, l'unité de pilotage peut être programmée pour alerter l'usager via l'écran 253, en affichant un message d'alerte. On peut notamment prévoir de rechercher la cause de cette défaillance ou de ce problème et de l'afficher afin de faciliter le travail de l'opticien.

Au cours d'une dernière opération dite de surfinition, la lentille ophtalmique 20 est polie à l'aide de la meule de polissage et chanfreinée à l'aide de la fraise 223.

Lors de cette opération, de la même manière qu'à l'opération précédente, la valeur sous charge F₂ᵢ de l'effort d'usinage est mesurée pour chaque position angulaire θᵢ de la lentille, de manière que l'escamotage ESC de la bascule 201 puisse être piloté en fonction de la force réellement exercée par la lentille sur la meule de polissage ou sur la fraise (cette force étant déduite de la différence ΔF'ᵢ entre la valeur sous charge F_{2 i-1} tout juste mesurée et la valeur hors charge F₀ᵢ mesurée lors de l'étape intermédiaire).

En fin de polissage, l'escamotage ESC de la bascule 201 est plus précisément piloté pour que cette différence ΔF'ᵢ soit particulièrement faible, ce qui assure un polissage doux du chant de la lentille. On comprend ici que ce pilotage doux est rendu possible par la précision avec laquelle on détermine l'effort réellement exercé par la lentille sur la meule de polissage.

Une fois détourée, chanfreinée et polie, la lentille ophtalmique est enfin extraite de la meuleuse 200 à l'aide de la mobilité de translation du deuxième arbre 203, puis est emboîtée dans l'entourage correspondant de la monture de lunettes sélectionnée.

Dans un second mode de mise en oeuvre de l'étape de finition de la lentille, on pilote les différents organes de la meuleuse en vitesse, de telle sorte que le temps de cycle soit égal à une durée prédéterminée ΔT.

Ainsi, d'une lentille à l'autre, la meuleuse met toujours le même temps à réaliser la finition de la lentille, quelle que soit notamment l'usure de la meule de forme.

Selon l'invention, on prévoir alors deux exceptions à ce mode de pilotage invariable des lentilles.

La première exception consiste, si la différence ΔFᵢ dépasse une valeur seuil prédéterminée durant une durée prédéterminée (ce qui signifie par exemple que la meule de forme est usée), à piloter la meuleuse non plus en vitesse mais en effort, de manière à ramener cette différence ΔFᵢ à la valeur seuil prédéterminée. On comprend alors que le temps de cycle pour mettre en oeuvre cette étape de finition dépasse dès lors ladite durée prédéterminée ΔT.

La seconde exception consiste, si la dérivée par rapport au temps de la différence ΔFᵢ dépasse une valeur seuil prédéterminée (ce qui signifie que l'effort d'usinage varie brusquement à la suite d'un problème quelconque), à réduire la vitesse d'usinage de la lentille. On comprend ici également que le temps de cycle pour mettre en oeuvre cette étape de finition dépasse alors ladite durée prédéterminée ΔT.

Dans ce mode de réalisation de l'invention, on peut également prévoir, à l'issue de l'étape de finition de chaque lentille, de déterminer un indicateur caractéristique de l'effort qui a été appliqué par la meule sur la lentille lors de l'ensemble de la finition de cette lentille.

On peut par exemple prévoir de mémoriser la valeur maximale atteinte par cet effort, en enregistrant la différence ΔFᵢ maximum relevée durant l'étape de finition. En variante, on pourrait également enregistrer une moyenne de cet effort.

Puis, au cours d'une étape de surveillance, on peut comparer cet indicateur avec une valeur seuil prédéterminée.

Ainsi, lorsque cette indicateur dépassera la valeur seuil, l'unité de pilotage sera programmée pour alerter l'usager via l'écran 253 que l'usure de sa meule de forme est avancée et qu'il est nécessaire sinon de la changer, au moins de suspendre l'usinage des lentilles réalisées dans des matériaux particulièrement durs.

Au cours de cette étape de surveillance, l'unité de pilotage pourra également surveiller l'évolution dudit indicateur, de manière à vérifier notamment que cette évolution est régulière. On pourra alors prévoir, si cette évolution est irrégulière, d'alerter l'usager en affichant un message d'alerte sur l'écran 253 afin de lui indiquer la présence d'un problème.

L'unité de pilotage pourra aussi, en fonction de cette évolution, calculer la durée de vie restante de la meule de forme et afficher à l'écran le nombre de cycles que la meule de forme est encore susceptible de réaliser avant de devoir être changée.

On peut bien entendu prévoir que ce nombre de cycles restant soit directement envoyé au technicien, de manière que l'usager n'ait plus à appeler le technicien mais que ce dernier vienne de lui-même remplacer la meule de forme lorsqu'elle est usée.

On peut aussi prévoir que l'unité de pilotage ré-étalonne en fonction de cette évolution les positions de ses différents organes afin de tenir compte de l'usure de la meule de forme.

La présente invention n'est nullement limitée aux modes de réalisation décrits et représentés, mais l'homme du métier saura y apporter toute variante conforme à son esprit.

On pourrait notamment prévoir de remplacer la jauge de contrainte par un ampèremètre qui, en mesurant l'intensité du courant d'alimentation du moteur d'actionnement des arbres 202, 203, permettrait de déterminer l'effort d'usinage.

On pourrait également remplacer la jauge de contrainte unidirectionnelle par une jauge de contrainte bidirectionnelle (ou par deux jauges de contrainte unidirectionnelles) afin de mesurer non seulement la composante radiale de l'effort d'usinage exercé par la lentille sur les outils, mais également la composante tangentielle de cet effort.

On pourrait par ailleurs prévoir de mettre en oeuvre l'opération intermédiaire avant l'opération d'ébauche de la lentille, lorsque cette dernière présente encore un contour circulaire.

Dans cette variante, l'avantage est qu'il est possible de réduire au maximum la durée de l'opération d'ébauche, en pilotant la bascule de telle manière que la lentille exerce sur la meule d'ébauche un effort proche du seuil autorisé.

L'inconvénient est toutefois que la valeur hors charge de l'effort d'usinage est mesurée en pilotant les organes de la meuleuse selon une trajectoire éloignée du contour 10, si bien que cette valeur hors charge n'est pas précisément représentative des efforts de frottement et d'inertie qui s'exerceront réellement sur les organes de la meuleuse lors des opérations de finition et surfinition. Pour obvier à ces inconvénients, il serait bien entendu possible de réitérer une seconde fois l'étape intermédiaire, entre les opérations d'ébauche et de finition, en pilotant cette fois les organes de la meuleuse selon une trajectoire proche du contour 10.

Il serait également possible de réaliser l'ébauche de la lentille en plusieurs passes et en réitérant l'étape intermédiaire entre chaque passe.

Dans une autre variante, on pourrait prévoir de détourer une lentille (n+1) en fonction des valeurs hors charge de l'effort mesuré à vide avant le détourage d'une lentille précédente (n).

En particulier, lorsque les deux lentilles à détourer l'une après l'autre sont identiques, il est possible de leur appliquer les mêmes consignes de détourage.

## Revendications

1. Procédé de détourage d'une lentille ophtalmique (20) à l'aide d'un dispositif d'usinage (200) équipé d'un moyen de blocage (202, 203) de la lentille ophtalmique (20), d'un outil d'usinage (210, 222, 223) de la lentille ophtalmique (20) et d'un capteur d'effort (234) adapté à mesurer un effort qui est relatif à l'effort appliqué par l'outil d'usinage sur la lentille ophtalmique (20), comportant :
- une étape de blocage de la lentille ophtalmique (20) sur ledit moyen de blocage (202, 203), et
- une étape de détourage de la lentille ophtalmique (20) à l'aide dudit outil d'usinage (210, 222, 223), au cours de laquelle on mesure la valeur sous charge dudit effort et on pilote ledit outil d'usinage (210, 222, 223) par rapport audit moyen de blocage (202, 203), en fonction de la valeur sous charge mesurée, de manière à ramener le contour initial (10) de la lentille ophtalmique (20) à un contour final de forme différente,
**caractérisé en ce qu'**il comporte, entre ladite étape de blocage et ladite étape de détourage, au moins une étape intermédiaire au cours de laquelle on pilote ledit outil d'usinage (210, 222, 223) par rapport audit moyen de blocage (202, 203) de manière à parcourir le tour de ladite lentille ophtalmique (20), sans contact, suivant une trajectoire déduite dudit contour initial (10), et au cours de laquelle on enregistre la valeur hors charge dudit effort mesuré par le capteur d'effort (234), qui est relatif aux efforts nécessaires pour déplacer à vide ledit outil d'usinage (210, 222, 223) par rapport audit moyen de blocage (202, 203), compte tenu des forces de frottement et d'inertie, et
**en ce qu'**au cours de l'étape de détourage, ledit outil d'usinage (210, 222, 223) est piloté en fonction de la valeur hors charge enregistrée.

2. Procédé de détourage selon la revendication précédente, dans lequel ladite trajectoire suit ledit contour initial (10) et est écartée de celui-ci d'une distance d'au maximum 5 millimètres.

3. Procédé de détourage selon l'une des revendications précédentes, dans lequel ladite trajectoire décrit un contour intermédiaire (12) qui est déduite dudit contour initial (10) par un calcul d'homothétie ou de surcote constante.

4. Procédé de détourage selon l'une des revendications 1 à 3, dans lequel ladite étape de détourage est une étape d'ébauche.

5. Procédé de détourage selon l'une des revendications 1 à 3, dans lequel ladite étape de détourage est une étape de finition, précédée d'une étape d'ébauche, et dans laquelle ladite étape intermédiaire intervient entre l'étape d'ébauche et l'étape de finition.

6. Procédé de détourage selon la revendication précédente, dans lequel ladite étape de finition comporte une opération de rainage ou une opération de biseautage ou une opération de fraisage et/ou une opération de chanfreinage et/ou une opération de polissage.

7. Procédé de détourage selon l'une des revendications précédentes, dans lequel, ledit moyen de blocage (202, 203) étant adapté à entraîner en rotation la lentille ophtalmique (20) en incrémentant sa position angulaire (θᵢ) d'un pas régulier :
- au cours de l'étape intermédiaire, la valeur hors charge dudit effort est enregistrée à chaque pas du moyen de blocage (202, 203),
- au cours de l'étape de détourage, la valeur sous charge dudit effort est mesurée à chaque pas du moyen de blocage (202, 203), et
- à chaque pas au cours de l'étape de détourage, ledit outil d'usinage (210, 222, 223) est piloté en fonction de la différence entre la valeur sous charge mesurée au pas précédent et la valeur hors charge enregistrée au pas correspondant lors de l'étape intermédiaire.

8. Procédé de détourage selon l'une des revendications 1 à 7, dans lequel, à l'étape de détourage, on pilote ledit outil d'usinage (210, 222, 223) par rapport audit moyen de blocage (202, 203) de telle sorte que l'effort appliqué par ledit outil d'usinage (210, 222, 223) sur la lentille ophtalmique (20), qui est déduit de la différence entre la valeur sous charge mesurée et la valeur hors charge enregistrée correspondante, reste sensiblement égal à une constante prédéterminée.

9. Procédé de détourage selon l'une des revendications 1 à 7, dans lequel, à l'étape de détourage, on pilote ledit outil d'usinage (210, 222, 223) par rapport audit moyen de blocage (202, 203) de telle sorte que le temps de cycle pour mettre en oeuvre cette étape de détourage soit égal à une durée prédéterminée.

10. Procédé de détourage selon la revendication 9, dans lequel, si la différence entre la valeur sous charge mesurée et la valeur hors charge enregistrée correspondante dépasse une valeur seuil déterminée durant une durée déterminée, on pilote ledit outil d'usinage (210, 222, 223) par rapport audit moyen de blocage (202, 203) en fonction de la différence entre la valeur sous charge mesurée et la valeur hors charge enregistrée correspondante de telle manière que le temps de cycle pour mettre en oeuvre cette étape de détourage dépasse ladite durée prédéterminée.

11. Procédé de détourage selon l'une des revendications 9 et 10, dans lequel, si la dérivée de ladite différence entre la valeur sous charge mesurée et la valeur hors charge enregistrée correspondante dépasse une valeur seuil déterminée, on pilote ledit outil d'usinage (210, 222, 223) par rapport audit moyen de blocage (202, 203) en fonction de la différence entre la valeur sous charge mesurée et la valeur hors charge enregistrée correspondante de telle manière que le temps de cycle pour mettre en oeuvre cette étape de détourage dépasse ladite durée prédéterminée.

12. Procédé de détourage selon l'une des revendications 9 à 11, dans lequel, à l'issue de ladite étape de détourage, on détermine un indicateur caractéristique de l'effort appliqué par ledit outil d'usinage (210, 222, 223) sur la lentille ophtalmique (20) au cours de l'étape de détourage, qui est fonction de la différence entre au moins une valeur sous charge mesurée et la valeur hors charge enregistrée correspondante, et dans lequel il est prévu une étape de surveillance dans laquelle on compare ledit indicateur avec une valeur seuil pour vérifier que l'outil d'usinage (210, 222, 223) est en état de fonctionnement.

13. Procédé de détourage selon l'une des revendications 9 à 12, dans lequel, à l'issue de ladite étape de détourage, on mémorise un indicateur caractéristique de l'effort appliqué par ledit outil d'usinage (210, 222, 223) sur la lentille ophtalmique (20) au cours de l'étape de détourage, qui est fonction de la différence entre au moins une valeur sous charge mesurée et la valeur hors charge enregistrée correspondante, et dans lequel il est prévu une étape de surveillance dans laquelle on surveille l'évolution dudit indicateur.

14. Dispositif d'usinage d'une lentille ophtalmique (20) comportant :
- un moyen de blocage (202, 203) de la lentille ophtalmique (20),
- un outil d'usinage (210, 222, 223) de la lentille ophtalmique (20),
- un capteur d'effort (234) adapté à mesurer un effort relatif à l'effort appliqué par l'outil d'usinage (210, 222, 223) sur la lentille ophtalmique (20), et
- une unité de pilotage (251) dudit outil d'usinage (210, 222, 223) par rapport audit moyen de blocage (202, 203),
**caractérisé en ce que** ladite unité de pilotage (251) est adaptée à mettre en oeuvre les étapes intermédiaire et de détourage d'un procédé de détourage conforme à l'une des revendications précédentes.

15. Dispositif d'usinage selon la revendication précédente, dans lequel ledit capteur d'effort (234) comporte au moins une jauge de contrainte unidirectionnelle ou une jauge de contrainte bidirectionnelle.

## Patentansprüche

1. Verfahren zum Ausschneiden einer Augenlinse (20) mit Hilfe einer Bearbeitungsvorrichtung (200), die mit einem Mittel (202, 203) zum Blockieren der Augenlinse (20), mit einem Werkzeug (210, 222, 223) zum Bearbeiten der Augenlinse (20) und mit einem Kraftsensor (234), der dafür ausgelegt ist, eine Kraft zu messen, die auf die Kraft bezogen ist, die von dem Bearbeitungswerkzeug auf die Augenlinse (20) ausgeübt wird, versehen ist, das Folgendes umfasst:
- einen Schritt des Blockierens der Augenlinse (20) an dem Blockiermittel (202, 203) und
- einen Schritt des Ausschneidens der Augenlinse (20) mit Hilfe des Bearbeitungswerkzeugs (210, 222, 223), in dessen Verlauf der Wert unter Last der Kraft gemessen wird und das Bearbeitungswerkzeug (210, 222, 223) in Bezug auf das Blockiermittel (202, 203) als Funktion des gemessenen Werts unter Last gesteuert wird, derart, dass der anfängliche Umfang (10) der Augenlinse (20) in einen endgültigen Umriss mit anderer Form überführt wird,
**dadurch gekennzeichnet, dass** es zwischen dem Blockierschritt und dem Ausschneideschritt wenigstens einen Zwischenschritt umfasst, in dessen Verlauf das Bearbeitungswerkzeug (210, 222, 223) in Bezug auf das Blockiermittel (202, 203) in der Weise gesteuert wird, dass der Umfang der Augenlinse (20) ohne Kontakt längs einer Bahn, die von dem anfänglichen Umriss (10) abgeleitet ist, durchlaufen wird, und in dessen Verlauf der lastfreie Wert der Kraft, die von dem Kraftsensor (234) gemessen wird und der auf Kräfte bezogen ist, die notwendig sind, um das Bearbeitungswerkzeug (210, 222, 223) in Bezug auf das Blockiermittel (202, 203) im Vakuum unter Berücksichtigung von Reibungs- und Trägheitskräften zu verlagern, aufgezeichnet wird, und
dass während des Ausschneideschrittes das Bearbeitungswerkzeug (210, 222, 223) als Funktion des aufgezeichneten lastfreien Werts gesteuert wird.

2. Ausschneideverfahren nach dem vorhergehenden Anspruch, wobei die Bahn dem anfänglichen Umriss (10) folgt und hiervon um eine Strecke von höchstens 5 Millimetern beabstandet ist.

3. Ausschneideverfahren nach einem der vorhergehenden Ansprüche, wobei die Bahn einen Zwischenumriss (12) beschreibt, der von dem anfänglichen Umriss (10) durch eine Ähnlichkeitstransformations- oder Konstantzugabeberechnung abgeleitet wird.

4. Ausschneideverfahren nach einem der Ansprüche 1 bis 3, wobei der Ausschneideschritt ein Rohentwurfsschritt ist.

5. Ausschneideverfahren nach einem der Ansprüche 1 bis 3, wobei der Ausschneideschritt ein Fertigstellungsschritt ist, dem ein Rohentwurfsschritt vorhergeht, und wobei der Zwischenschritt zwischen dem Rohentwurfsschritt und dem Fertigstellungsschritt erfolgt.

6. Ausschneideverfahren nach dem vorhergehenden Anspruch, wobei der Fertigstellungsschritt einen Schlitzbildungsvorgang oder einen Kantenbrechungsvorgang oder einen Fräsvorgang und/oder einen Anfasungsvorgang und/oder einen Poliervorgang umfasst.

7. Ausschneideverfahren nach einem der vorhergehenden Ansprüche, wobei dann, wenn das Blockiermittel (202, 203) dafür ausgelegt ist, die Augenlinse (20) durch Inkrementieren ihrer Winkelposition (θᵢ) mit regelmäßiger Schrittweite rotatorisch anzutreiben:
- während des Zwischenschrittes der lastfreie Wert der Kraft bei jedem Schritt des Blockiermittels (202, 203) aufgezeichnet wird,
- während des Ausschneideschrittes der Wert unter Last der Kraft bei jedem Schritt des Blockiermittels (202, 203) gemessen wird und
- in jedem Schritt während des Ausschneideschrittes das Bearbeitungswerkzeug (210, 222, 223) als Funktion der Differenz zwischen dem Wert unter Last, der im vorhergehenden Schritt gemessen wird, und dem lastfreien Wert, der im entsprechenden Schritt während des Zwischenschrittes aufgezeichnet wird, gesteuert wird.

8. Ausschneideverfahren nach einem der Ansprüche 1 bis 7, wobei im Ausschneideschritt das Bearbeitungswerkzeug (210, 222, 223) in Bezug auf das Blockiermittel (202, 203) in der Weise gesteuert wird, dass die durch das Bearbeitungswerkzeug (210, 222, 223) auf die Augenlinse (20) ausgeübte Kraft, die aus der Differenz zwischen dem gemessenen Wert unter Last und dem entsprechenden aufgezeichneten lastfreien Wert abgeleitet wird, im Wesentlichen gleich einer vorgegebenen Konstante bleibt.

9. Ausschneideverfahren nach einem der Ansprüche 1 bis 7, wobei im Ausschneideschritt das Bearbeitungswerkzeug (210, 222, 223) in Bezug auf das Blockiermittel (202, 203) in der Weise gesteuert wird, dass die Zykluszeit zum Ausführen dieses Ausschneideschrittes gleich einer vorgegebenen Dauer ist.

10. Ausschneideverfahren nach Anspruch 9, wobei dann, wenn die Differenz zwischen dem gemessenen Wert unter Last und dem entsprechenden aufgezeichneten lastfreien Wert während einer vorgegebenen Dauer einen bestimmten Schwellenwert überschreitet, das Bearbeitungswerkzeug (210, 222, 223) in Bezug auf das Blockiermittel (202, 203) als Funktion der Differenz zwischen dem gemessenen Wert unter Last und dem entsprechenden aufgezeichneten lastfreien Wert in der Weise gesteuert wird, dass die Zykluszeit für die Ausführung dieses Ausschneideschrittes die vorgegebene Dauer überschreitet.

11. Ausschneideverfahren nach einem der Ansprüche 9 und 10, wobei dann, wenn die Ableitung der Differenz zwischen dem gemessenen Wert unter Last und dem entsprechenden aufgezeichneten lastfreien Wert einen bestimmten Schwellenwert überschreitet, das Bearbeitungswerkzeug (210, 222, 223) in Bezug auf das Blockiermittel (202, 203) als Funktion der Differenz zwischen dem gemessenen Wert unter Last und dem entsprechenden aufgezeichneten lastfreien Wert in der Weise gesteuert wird, dass die Zykluszeit für die Ausführung dieses Ausschneideschrittes die vorgegebene Dauer überschreitet.

12. Ausschneideverfahren nach einem der Ansprüche 9 bis 11, wobei am Ende des Ausschneideschrittes ein Indikator bestimmt wird, der für die von dem Bearbeitungswerkzeug (210, 222, 223) während des Ausschneideschrittes auf die Augenlinse (20) ausgeübte Kraft charakteristisch ist und eine Funktion der Differenz zwischen wenigstens einem gemessenen Wert unter Last und dem entsprechenden aufgezeichneten lastfreien Wert ist, und wobei ein Überwachungsschritt vorgesehen ist, in dem der Indikator mit einem Schwellenwert verglichen wird, um zu verifizieren, dass das Bearbeitungswerkzeug (210, 222, 223) in einem betriebsfähigen Zustand ist.

13. Ausschneideverfahren nach einem der Ansprüche 9 bis 12, wobei am Ende des Ausschneideschrittes ein Indikator gespeichert wird, der für die von dem Bearbeitungswerkzeug (210, 222, 223) auf die Augenlinse (20) während des Ausschneideschrittes ausgeübte Kraft charakteristisch ist, der eine Funktion der Differenz zwischen wenigstens einem gemessenen Wert unter Last und dem entsprechenden aufgezeichneten lastfreien Wert ist, wobei ein Überwachungsschritt vorgesehen ist, in dem die Entwicklung des Indikators überwacht wird.

14. Vorrichtung zum Bearbeiten einer Augenlinse (20), die Folgendes umfasst:
- ein Mittel (202, 203) zum Blockieren der Augenlinse (20),
- ein Werkzeug (210, 222, 223) zum Bearbeiten der Augenlinse (20),
- einen Kraftsensor (234), der dafür ausgelegt ist, eine Kraft, die auf die von dem Bearbeitungswerkzeug (210, 222, 223) auf die Augenlinse (20) ausgeübte Kraft bezogen ist, zu messen, und
- eine Einheit (251) zum Steuern des Bearbeitungswerkzeugs (210, 222, 223) in Bezug auf das Blockiermittel (202, 203),
**dadurch gekennzeichnet, dass** die Steuereinheit (251) dafür ausgelegt ist, den Zwischenschritt und den Ausschneideschritt eines Ausschneideverfahrens nach einem der vorhergehenden Ansprüche auszuführen.

15. Bearbeitungsvorrichtung nach dem vorhergehenden Anspruch, wobei der Kraftsensor (234) wenigstens einen unidirektionalen Dehnungsmesser oder einen bidirektionalen Dehnungsmesser umfasst.

## Claims

1. A process for shaping an ophthalmic lens (20) using a machining device (200) equipped with clamping means (202, 203) for clamping the ophthalmic lens (20), a machining tool (210, 222, 223) for machining the ophthalmic lens (20) and a force sensor (234) adapted to measure a force that is related to the force applied by the machining tool to the ophthalmic lens (20), comprising:
- a step of clamping the ophthalmic lens (20) in said clamping means (202, 203); and
- a step of shaping the ophthalmic lens (20) using said machining tool (210, 222, 223), in which step the loaded value of said force is measured and said machining tool (210, 222, 223) is controlled, relative to said clamping means (202, 203), depending on the measured loaded value, so as to bring the initial outline (10) of the ophthalmic lens (20) to a final outline of different shape,
**characterized in that** it comprises, between said clamping step and said shaping step, at least one intermediate step in which said machining tool (210, 222, 223) is controlled, relative to said clamping means (202, 203), so as to travel the circumference of said ophthalmic lens (20), without contact, following a path deduced from said initial outline (10), and in which the unloaded value of said force measured by the force sensor (234) is recorded, which value is related to the forces required to move said machining tool (210, 222, 223) in free space relative to said clamping means (202, 203), considering the frictional and inertial forces at work; and
**in that**, in the shaping step, said machining tool (210, 222, 223) is controlled depending on the recorded unloaded value.

2. The shaping process as claimed in the preceding claim, in which said path follows said initial outline (10) and is separated from the latter by a distance of at most 5 millimeters.

3. The shaping process as claimed in one of the preceding claims, in which said path describes an intermediate outline (12) that is deduced from said initial outline (10) by a homothetic transformation or a constant addition.

4. The shaping process as claimed in one of claims 1 to 3, in which said shaping step is a roughing-out step.

5. The shaping process as claimed in one of claims 1 to 3, in which said shaping step is a finishing step, preceded by a roughing-out step, and in which said intermediate step comes between the roughing-out step and the finishing step.

6. The shaping process as claimed in the preceding claim, in which said finishing step comprises a grooving operation or a beveling operation or a milling operation and/or a chamfering operation and/or a polishing operation.

7. The shaping process as claimed in one of the preceding claims, in which, said clamping means (202, 203) being adapted to drive the ophthalmic lens (20) to rotate by incrementing its angular position (θᵢ) by a regular increment:
- in the intermediate step, the unloaded value of said force is recorded for each increment of the clamping means (202, 203);
- in the shaping step, the loaded value of said force is measured for each increment of the clamping means (202, 203); and
- for each increment in the shaping step, said machining tool (210, 222, 223) is controlled depending on the difference between the loaded value measured for the preceding increment and the unloaded value recorded for the corresponding increment in the intermediate step.

8. The shaping process as claimed in one of claims 1 to 7, in which, in the shaping step, said machining tool (210, 222, 223) is controlled, relative to said clamping means (202, 203), such that the force applied by said machining tool (210, 222, 223), to the ophthalmic lens (20), which force is deduced from the difference between the measured loaded value and the corresponding recorded unloaded value, remains substantially equal to a preset constant.

9. The shaping process as claimed in one of claims 1 to 7, in which, in the shaping step, said machining tool (210, 222, 223) is controlled, relative to said clamping means (202, 203), in such a way that the cycle time for implementing this shaping step is equal to a preset length of time.

10. The shaping process as claimed in claim 9, in which, if the difference between the measured loaded value and the corresponding recorded unloaded value exceeds a preset threshold value for a set length of time, said machining tool (210, 222, 223) is controlled, relative to said clamping means (202, 203), depending on the difference between the measured loaded value and the corresponding recorded unloaded value, in such a way that the cycle time for implementing this shaping step exceeds said preset length of time.

11. The shaping process as claimed in one of claims 9 and 10, in which, if the derivative of the difference between the measured loaded value and the corresponding recorded unloaded value exceeds a set threshold value, said machining tool (210, 222, 223) is controlled, relative to said clamping means (202, 203), depending on the difference between the measured loaded value and the corresponding recorded unloaded value, in such a way that the cycle time for implementing this shaping step exceeds said preset length of time.

12. The shaping process as claimed in one of claims 9 to 11, in which, at the end of said shaping step, a characteristic indicator of the force applied by said machining tool (210, 222, 223) to the ophthalmic lens (20) in the shaping step is determined, this indicator depending on the difference between at least one measured loaded value and the corresponding recorded unloaded value, and in which provision is made for a monitoring step in which said indicator is compared with a threshold value to verify that the machining tool (210, 222, 223) is in a fit state to operate.

13. The shaping process as claimed in one of claims 9 to 12, in which, at the end of said shaping step, a characteristic indicator of the force applied by said machining tool (210, 222, 223) to the ophthalmic lens (20) in the shaping step is stored in memory, this indicator depending on the difference between at least one measured loaded value and the corresponding recorded unloaded value, and in which provision is made for a monitoring step in which variation in said indicator is monitored.

14. A device for machining an ophthalmic lens (20), comprising:
- clamping means (202, 203) for clamping the ophthalmic lens (20);
- a machining tool (210, 222, 223) for machining the ophthalmic lens (20);
- a force sensor (234) adapted to measure a force related to the force applied by the machining tool (210, 222, 223) to the ophthalmic lens (20); and
- a unit (251) for controlling said machining tool (210, 222, 223) relative to said clamping means (202, 203),
**characterized in that** said controlling unit (251) is adapted to implement the intermediate and shaping steps of a shaping process as claimed in one of the preceding claims.

15. The machining device as claimed in the preceding claim, in which said force sensor (234) comprises at least one unidirectional strain gauge or one bidirectional strain gauge.
